# EUROPÄISCHE PATENTANMELDUNG

(11) **EP 2 105 189 A1**
(43) Veröffentlichungstag der Anmeldung: **30.09.2009**
(21) Anmeldenummer: 08005848.0
(22) Anmeldetag: 27.03.2008
(51) Int. Cl.: B01D 53/14, B01D 53/62, C01B 31/20

(54) **Verfahren und Vorrichtung zum Abtrennen von Kohlendioxid aus Rauchgas einer fossilbefeuerten Kraftwerksanlage**

(71) Anmelder: SIEMENS AKTIENGESELLSCHAFT, 80333 München (DE)
(72) Erfinder: Rost, Mike, 91058 Erlangen (DE); Schneider, Rüdiger, Dr., 65817 Eppstein (DE); Schramm, Henning, Dr., 60598 Frankfurt (DE)

(57) **Zusammenfassung**

Die Erfindung betrifft ein Verfahren zum Abtrennen von Kohlendioxid aus einem Rauchgas einer fossilbefeuerten Kraftwerksanlage, bei dem in einem Verbrennungsprozess (2) ein fossiler Brennstoff verbrannt wird, wobei ein heißes, kohlendioxidhaltiges Abgas (13) erzeugt wird, bei dem in einem Absorptionsprozess (4) kohlendioxidhaltiges Abgas (13) mit einem Absorptionsmedium in Kontakt gebracht wird, wobei Kohlendioxid von dem Absorptionsmedium aufgenommen wird, wobei ein beladenes Absorptionsmedium (14) gebildet wird, bei dem in einem Desorptionsprozess (5) von dem beladenen Absorptionsmedium (14) gasförmiges Kohlendioxid (15) abgegeben wird, bei dem in einem Verdichtungsprozess (6) gasförmiges Kohlendioxid verdichtet wird, wobei es auf eine Temperatur T erwärmt wird, und bei dem Wärme von verdichtetem Kohlendioxid in dem Desorptionsprozess (5) verwendet wird.

## Beschreibung

Die Erfindung betrifft ein Verfahren zum Betreiben einer fossilbefeuerten Kraftwerksanlage und insbesondere ein Verfahren zum Abtrennen von Kohlendioxid aus einem Rauchgas einer fossilbefeuerten Kraftwerksanlage. Die Erfindung betrifft außerdem eine fossilbefeuerte Kraftwerksanlage zum Abtrennen von Kohlendioxid aus Rauchgas, an der das erfindungsgemäße Verfahren ausführbar ist.

Bei solchen fossilbefeuerten Kraftwerksanlagen zur Erzeugung elektrischer Energie entsteht durch die Verbrennung eines fossilen Brennstoffes ein kohlendioxidhaltiges Rauchgas. Dieses Produkt wird in der Regel in die Atmosphäre entlassen. Das sich in der Atmosphäre ansammelnde Kohlendioxid behindert die Wärmeabstrahlung unserer Erde und führt dabei durch den so genannten Treibhauseffekt zu einer Erhöhung der Erdoberflächentemperatur. Um eine Reduzierung der Kohlendioxid-Emission bei fossilbefeuerten Kraftwerken zu erreichen, kann Kohlendioxid aus dem Rauchgas abgetrennt werden.

Zur Abtrennung von Kohlendioxid aus einem Gasgemisch sind allgemein verschiedene Verfahren bekannt. Insbesondere zum Abtrennen von Kohlendioxid aus einem Rauchgas nach einem Verbrennungsprozess (Post-combustion CO₂ separation) sind die Verfahren ,Absorption-Desorption' oder ,Tieftemperaturabscheidung (Cryogenic)' Stand der Technik.

So beschreibt die EP 0 413 199 B1 ein Verfahren zur Minderung des Kohlendioxidgehalts des Abgases eines Gas- und Dampfturbinenkraftwerks und ein danach arbeitendes Kraftwerk. Bei einem solchen Gas- und Dampfkraftwerk mit nachgeschaltetem Vergaser für den fossilen Brennstoff wird das Rohgas des Vergasers bevorzugt entstaubt, zur Anpassung an die Arbeitstemperatur nachfolgender Anlagenteile und Katalysatoren abgekühlt, gereinigt, vorzugsweise mit Wasser angereichert und anschließend konvertiert, d.h. Kohlenmonoxid und Wasser in Kohlendioxid und Wasserstoff verwandelt. Danach werden Kohlendioxid sowie bevorzugt auch Schwefelverbindungen mit einem oder mehreren Waschmitteln abgetrennt. Das nahezu kohlendioxidfreie, im wesentlichen Wasserstoff enthaltende Restgas wird nun der Brennkammer der Gasturbine als Brennstoff zugeführt.

Das beschriebene Abtrennen von Kohlendioxid mit einem Waschmittel wird in großtechnischem Maßstab mit einem Absorptions-Desorptions-Prozess durchgeführt. In einem klassischen Absorptions-Desorptions-Prozess wird das Rauchgas in einer Absorptionskolonne mit einem selektiven Lösungsmittel, in Kontakt gebracht. Dabei erfolgt die Aufnahme von Kohlendioxid durch einen chemischen oder physikalischen Prozess. Das gereinigte Rauchgas wird für eine weitere Verarbeitung oder Austragung aus der Absorptionskolonne ausgelassen. Das mit Kohlendioxid beladene Lösungsmittel wird zur Abtrennung des Kohlendioxids und Regenerierung des Lösungsmittels in eine Desorptionskolonne geleitet. Die Abtrennung in der Desorptionskolonne kann thermisch erfolgen. Dabei wird aus dem beladenen Lösungsmittel ein Gas- Dampfgemisch aus gasförmigem Kohlendioxid und verdampften Lösungsmittel ausgetrieben. Das verdampfte Lösungsmittel wird anschließend von dem gasförmigen Kohlendioxid separiert und in mehreren Stufen verdichtet und gekühlt. In flüssigem oder gefrorenem Zustand kann das Kohlenddioxid dann einer Lagerung oder Verwertung zugeführt werden. Das regenerierte Lösungsmittel wird erneut zur Absorberkolonne geleitet, wo es wieder Kohlendioxid aus dem kohlendioxidhaltigen Rauchgas aufnehmen kann.

Nachteil am Stand der Technik ist insbesondere der hohe Energieaufwand und die dadurch unerwünschte Verschlechterung des Wirkungsgrades der fossilbefeuerten Kraftwerksanlage. Die geschmälerte Ressourcennutzung reduziert daher die Wirtschaftlichkeit der Kraftwerksanlage.

Um diesen Nachteil entgegenzuwirken, ist ferner bekannt die in dem regenerierten Lösungsmittel bzw. in dem Gas- Dampfgemisch enthaltene Wärme zur Erwärmung des kalten, beladenen Lösungsmittels zu nutzen. Dadurch verringert sich der Bedarf an zusätzlicher Wärme, die dem Prozess ansonsten von Außen zugeführt werden muss. Die für den Prozess notwendige zusätzliche Wärme wird insbesondere durch Dampf bereitgestellt. Dieser Dampf wird üblicherweise in einem Dampferzeuger erzeugt, der Bestandteil einer Gas- und Dampf- oder Dampfkraftwerksanlage ist. Eine Entnahme dieses Dampfes reduziert folglich den Wirkungsgrad der Kraftwerksanlage.

Die Aufgabe der Erfindung ist, ein Verfahren zum Abtrennen von Kohlendioxid aus einem Rauchgas einer fossilbefeuerten Kraftwerksanlage vorzuschlagen, das die Nachteile aus dem Stand der Technik beseitigt. Die Aufgabe des erfindungsgemäßen Verfahrens besteht im Einzelnen daher darin, die Standardverschaltung einer Kohlendioxid-Abscheideeinrichtung mit dem Ziel der Energieeinsparung zu optimieren. Es ist ferner Aufgabe des erfindungsgemäßen Verfahrens die laufenden Kosten einer fossilbefeuerten Kraftwerksanlage mit einer Kohlendioxid-Abscheideeinrichtung deutlich zu senken. Eine weitere Aufgabe des erfindungsgemäßen Verfahrens ist, die Belastung der Umwelt durch Kohlendioxid-Emission nachweisbar zu vermindern.

Die Aufgabe der Erfindung ist weiterhin, eine nach diesem Verfahren arbeitende fossilbefeuerte Kraftwerksanlage vorzuschlagen.

Die auf ein Verfahren gerichtete Aufgabe ist erfindungsgemäß gelöst mit einem Verfahren zum Abtrennen von Kohlendioxid aus einem Rauchgas einer fossilbefeuerten Kraftwerksanlage, bei dem in einem Verbrennungsprozess ein fossiler Brennstoff verbrannt wird, wobei ein kohlendioxidhaltiges Abgas erzeugt wird, bei dem in einem Absorptionsprozess kohlendioxidhaltiges Abgas mit einem Absorptionsmedium in Kontakt gebracht wird, wobei Kohlendioxid von dem Absorptionsmedium aufgenommen wird, wobei ein beladenes Absorptionsmedium gebildet wird, bei dem in einem Desorptionsprozess von dem beladenen Absorptionsmedium gasförmiges Kohlendioxid abgegeben wird, bei dem zudem in einem Verdichtungsprozess gasförmiges Kohlendioxid verdichtet wird, wobei es auf eine Temperatur T erwärmt wird, und bei dem Wärme von verdichtetem Kohlendioxid in dem Desorptionsprozess verwendet wird.

Die Erfindung geht von der Überlegung aus, dass bei dem Verfahren zur Abtrennung von Kohlendioxid aus einem Rauchgas einer fossilbefeuerten Kraftwerksanlage das durch die Verbrennung entstehende kohlendioxidhaltige Rauchgas in eine der Verbrennungseinrichtung nachgeschalteten Abscheideeinrichtung geleitet wird. In dem Absorptionsprozess wird das kohlendioxidhaltige Abgas mit einem Absorptionsmedium in Kontakt gebracht, wobei Kohlendioxid von dem Absorptionsmedium aufgenommen wird. Die Temperatur des Absorptionsmediums ist dabei niedriger als die des kohlendioxidhaltigen Rauchgases. Den Absorptionsprozess verlässt ein von Kohlendioxid befreites Rauchgas sowie ein mit Kohlendioxid beladenes Absorptionsmedium. Zur Anpassung an die Arbeitstemperatur des Desorptionsprozesses wird das beladene Absorptionsmedium vorzugsweise in einem Wärmeübertragungsprozess erwärmt. In dem Desorptionsprozess wird Kohlendioxid aus dem Absorptionsmedium ausgetrieben, so dass den Prozess ein regeneriertes Absorptionsmedium sowie ein Gasgemisch aus gasförmigem Kohlendioxid und dampfförmigen Absorptionsmedium verlassen. Das Gasgemisch wird in einem nachgeschalteten Verdichterprozess verdichtet. Dabei entsteht durch die Verdichtung des gasförmigen Kohlendioxids Kompressionswärme. Durch das Verdichten des dampfförmigen Absorptionsmediums kondensiert das Absorptionsmedium und wodurch Kondensationswärme frei wird. Die Kompressions- und Kondensationswärme wird genutzt um den Desorptionsprozess zu unterstützen. Somit kann zum Austreiben von Kohlendioxid aus dem beladenen Absorptionsmedium weitgehend auf zusätzliche Wärme, die bei einer Kraftwerksanlage durch Dampf bereitgestellt wird, verzichtet werden. Der eingesparte Dampf ist folglich zur Energieerzeugung verwendbar, wodurch sich der Wirkungsgrad der Kraftwerksanlage deutlich erhöht.

Die Erfindung zum Abtrennen von Kohlendioxid aus einem Rauchgas ermöglicht somit gegenüber dem Stand der Technik einen kostengünstigeren Betrieb einer Kohlendioxid-Abscheideeinrichtung. Die Erfindung ermöglicht zudem die nachträgliche Installation einer Kohlendioxid-Abscheideeinrichtung unter Erfüllung ökonomischer Bedingungen.

In einer vorteilhaften Weiterbildung des Kohlendioxid-Abtrennungsverfahrens wird in dem Desorptionsprozess gasförmiges Kohlendioxid thermisch aus einem beladenen Absorptionsmedium ausgetrieben. Dies ermöglicht die Nutzung von Wärme, die in dem Gesamtprozess der Kraftwerksanlage anfällt.

Vorteilhafterweise wird in dem Kohlendioxid-Abtrennungsverfahren ein Fluid als Absorptionsmedium vorgeschlagen. Gegenüber einem Festkörpermedium bietet ein Fluid in dem Erfindungsgemäßen Verfahren erhebliche Vorteile bei der Durchleitung des Mediums in den Prozess. Flüssigkeiten, Gase, Aerosole oder Suspensionen sind dabei als Fluid geeignet. Als Flüssigkeit wird vorzugsweise die Verwendung eines verdampfbaren Lösungsmittels vorgeschlagen.

Ein besonders guter Prozessdurchlauf wird durch eine Lösung aus H₂Ound Aminderivaten als Lösungsmittel erzielt. Bekannt sind beispielsweise Lösungen unter den Namen MEA (Mono-Ethanolamin) und MDEA (Methyldiethanolamin).

Zweckmäßigerweise wird bei dem Kohlendioxid-Abtrennungsverfahren in dem Desorptionsprozess von dem beladenen Absorptionsmedium gasförmiges Kohlendioxid thermisch ausgetrieben. Dies ermöglicht die Nutzung von Wärme, die in dem Gesamtprozess der Kraftwerksanlage auf günstige Weise entnommen werden kann. Vorzugsweise wird thermische Energie durch Dampf bereit gestellt, der z.B. aus dem Kessel einer Dampfkraftwerkesanlage oder dem Abhitzedampferzeuger einer Gas- und Dampfturbinen-Kraftwerksanlage entnommen wird. Das Gas-Dampfgemisch aus gasförmigen Kohlendioxid und verdampftem Absorptionsmedium, wird auch als Brüden bezeichnet.

In Abhängigkeit von der Fahrweise des Verbrennungs- und Abscheideprozesses ist es von besonderem Vorteil, wenn ein Teil von gasförmigem Kohlendioxid verdichtet und auf eine Temperatur T erwärmt wird. Ebenso ist es vorteilhaft, wenn ein Teil der Wärme von verdichtetem Kohlendioxid in dem Desorptionsprozess verwendet wird.

In einer vorteilhaften Weiterbildung des Kohlendioxid-Abtrennungsverfahrens wird in einem Wärmeübertragungsprozess Wärme von abgetrenntem und vorzugsweise verdichtetem Kohlendioxid entzogen, an ein beladenes Absorptionsmedium abgegeben und dem Desorptionsprozess zugeführt.

Bei einer besonderen Ausgestaltung des Kohlendioxid-Abtrennungsverfahrens wird in einem Wärmeübertragungsprozess Wärme von regeneriertem Absorptionsmedium entzogen, an ein beladenes Absorptionsmedium abgegeben und dem Absorptionsprozess zugeführt. Dadurch wird einerseits eine Vorwärmung des beladenen Absorptionsmediums an die Arbeitstemperatur des nachgeschalteten Desorptionsprozesses und andererseits eine Abkühlung des regenerierten Absorptionsmediums an die Arbeitstemperatur des nachgeschalteten Absorptionsprozesses erzielt. Dies erspart Heizenergie sowie Energie für die Kühlung.

In einer vorteilhaften Weiterbildung des Kohlendioxid-Abtrennungsverfahrens wird in einem weiteren Wärmeübertragungsprozess Wärme von regeneriertem Absorptionsmedium in Abhängigkeit von dem erforderlichen Temperaturniveau im Absorptionsprozess entzogen und dem Desorptionsprozess zur Verfügung gestellt. Dies ermöglicht ein Einstellen der Arbeitstemperatur in dem nachgeschalteten Absorptionsprozess

Die überwiegende Kondensation des verdampften Absorptionsmediums findet bereits in dem Desorptionsprozess statt. Um den Reinheitsgrad des Kohlendioxids weiter zu erhöhen, wird vorteilhaft in einem Entspannungsprozess das Gas-/ Dampfgemisch aus desorbiertem Kohlendioxid und verdampftem Absorptionsmedium wenigstens teilweise expandiert. Dabei scheidet sich kondensiertes Absorptionsmedium und ein im Wesentlichen von Absorptionsmedium freies Kohlendioxid voneinander ab.

In einer weiteren vorteilhaften Ausgestaltung des Kohlendioxid-Abtrennungsverfahrens wird das kondensierte Absorptionsmedium dem Desorptionsprozess zugeführt. Dadurch kann das Absorptionsmedium weitgehend in einem geschlossenen Kreislauf gehalten werden.

In einer besonderen Weiterbildung des Kohlendioxid-Abtrennungsverfahrens wird das im Wesentlichen von Absorptionsmedium freie Kohlendioxid zur thermischen Unterstützung des Desorptionsprozesses genutzt. Dabei wird es in einem Verdichtungsprozess verdichtet oder verflüssigt, und die dabei entstehende Wärme mittels einem Wärmeübertragungsprozess dem Desorptionsprozess zugeführt.

In einer vorteilhaften Weiterbildung des Kohlendioxid-Abtrennungsverfahrens wird in einem Wärmeübertragungsprozess Wärme von Dampf aus dem Kraftwerksprozess an ein beladenes Absorptionsmedium abgegeben und dem Desorptionsprozess zugeführt. Der Dampf wird durch den Wärmeübertrag abgekühlt, wodurch er kondensiert und zusätzliche Kondensationswärme frei gibt. Durch die Nutzung von Dampf aus der Kraftwerksanlage kann der Desorptionsprozess auch ohne Unterstützung von anderweitig abfallender Wärme betrieben werden. Dies ist beim Anfahren der Abscheideeinrichtung besonders von Vorteil.

Bei einer besonderen Weiterbildung des Kohlendioxid-Abtrennungsverfahrens wird in einem Wärmeübertragungsprozess Wärme von verdichtetem Gas-/ Dampfgemisch entzogen und an das beladenes Absorptionsmedium abgegeben. So wird das beladene Absorptionsmedium vor Eintritt in den Desorptionsprozess erwärmt. Dadurch muss im Desorptionsprozess weniger Energie zur Erwärmung des beladenen Absorptionsmediums aufgewandt werden, so dass Energie eingespart wird.

Die auf eine fossilbefeuerte Kraftwerksanlage gerichtete Aufgabe der Erfindung wird gelöst durch eine fossilbefeuerte Kraftwerksanlage, mit einer einer Verbrennungseinrichtung nachgeschalteten Abscheideeinrichtung, zur Abscheidung von Kohlendioxid aus dem kohlendioxidhaltigen Abgas, wobei die Abscheideeinrichtung eine Absorptionseinheit zur Aufnahme von gasförmigen Kohlendioxid sowie eine Desorptionseinheit zur Abgabe von gasförmigen Kohlendioxid aufweist, und dass ein Desorbatverdichter mit einer Saugseite und einer Druckseite vorgesehen ist, wobei die Saugseite mit der Desorptionseinheit derart verbunden ist, dass desorbiertes Kohlendioxid in dem Desorbatverdichter komprimierbar ist, und dass ein Wärmeübertrager vorgesehen ist, der primärseitig mit der Druckseite des Desorbatverdichters und sekundärseitig mit der Desorptionseinheit verbunden ist.

Die auf eine fossilbefeuerte Kraftwerksanlage gerichtete Erfindung geht von der Überlegung aus, dass der Desorptionseinheit ein Desorbatverdichter nachgeschaltet ist, und dass der Wärmeübertrager den Desorbatverdichter mit der Desorptionseinheit verbindet, so dass Wärme aus dem Desorbatverdichter in die Desorptionseinheit rückführbar ist. Somit kann im Betrieb der fossilbefeuerte Kraftwerksanlage der Desorptionseinheit Wärme zuzuführen, die in dem Desorbatverdichter durch verdichten des Gas- Dampfgemischs aus gasförmigem Kohlendioxid und dampfförmigen Absorptionsmedium entsteht. Die Desorptionseinheit ist somit durch die optimierte Verschaltung im Energieverbrauch reduziert.

Der Desorbatverdichter weist auf der Druckseite eine höhere Temperatur und einen höheren Druck auf als auf der Saugseite. Der Wärmeübertrager nimmt primärseitig zuleitend die Wärme von der Druckseite des Desorbatverdichters auf und gibt sie sekundärseitig ableitend an die Desorptionseinheit ab. Die Abgabe der Wärme an die Desorptionseinheit erfolgt dabei vorzugsweise im unteren Bereich der Desorptionseinheit. Die Absorptions- und Desorptionseinheit können dabei aus einer, sowie auch aus mehreren Kolonnen bestehen. Solche Kolonnen sind säulenförmig und in der chemischen Industrie bekannt. Sie dienen dazu, Stoffgemische durch thermische Verfahren zu trennen. Dies erfolgt unter Ausnutzung von Gleichgewichtszuständen zwischen unterschiedlichen Phasen.

Die Energie zum Abgeben von Kohlendioxid aus einem mit Kohlendioxid beladenen Absorptionsmedium wird in der Regel durch Heißdampf bereit gestellt, der z.B. aus dem Kessel einer Dampfkraftwerksanlage oder dem Abhitzedampferzeuger einer Gas- und Dampfturbinenkraftwerksanlage entnommen wird. Da durch den deutlich effizienteren Betrieb der Kohlendioxid-Abscheidevorrichtung eine Einsparung des Heißdampfes erreicht wird, erhöht sich der Gesamtwirkungsgrad der fossilbefeuerten Kraftwerksanlage.

Die Erfindung einer fossilbefeuerten Kraftwerksanlage mit einem der Desorptionseinheit nachgeschalteten Desorbatverdichter und einem Wärmeübertrager, der den Desorbatverdichter mit der Desorptionseinheit verbindet und über welchen Wärme aus dem Desorbatverdichter in die Desorptionseinheit rückführbar ist, ermöglicht einen wesentlich effizienteren Betrieb der Gesamtkraftwerksanlage. Dies ist dadurch möglich, dass der Desorptionseinheit weniger Energie in Form von Wärme zugeführt werden muss. Die Erfindung ermöglicht zudem die nachträgliche Installation einer Kohlendioxid-Abscheidevorrichtung unter Erfüllung ökonomischer Bedingungen.

In einer vorteilhaften Weiterbildung der fossilbefeuerten Kraftwerksanlage ist ein Wärmeübertrager vorgesehen, der primär zuleitend mit der Desorptionseinheit und primär ableitend mit der Absorptionseinheit verbunden ist. Dies bewirkt eine Abkühlung für das regenerierte Absorptionsmedium. Sekundär zuleitend ist der Wärmeübertrager mit der Absorptionseinheit und sekundär ableitend mit der Desorptionseinheit verbunden ist. Im Betrieb ist so eine Vorwärmung für das beladene Absorptionsmedium bewirkt. Dabei ist die primäre Seite die Energie abgebende Seite und die sekundäre Seite die Energie aufnehmende Seite. Die Funktionsweise des Wärmetauschers entspricht dabei der eines Vorwärmers. Durch die Verwendung eines Wärmetauschers kann im System freiwerdende Wärmeenergie wieder dem System zugeführt werden.

In einer besonderen Ausgestaltung der fossilbefeuerte Kraftwerksanlage ist eine Trennvorrichtung vorgesehen. Die Trennvorrichtung ist zur Einleitung des Gas-Dampfgemischs aus gasförmigem Kohlendioxid und dampfförmigen Absorptionsmedium mit dem Wärmeübertrager verbunden, der dem Desorbatverdichter nachgeschaltet ist. Die Trennvorrichtung kann als Druckbehälter ausgestaltet sein. Die Trennvorrichtung ist zur Ableitung eines Kondensats mit der Desorptionseinheit verbunden und zur Ausleitung eines weitgehend von dampfförmigem Absorptionsmedium befreiten Kohlendioxids mit dem Desorbatverdichter verbunden. Die Trennvorrichtung dient der teilweisen Entspannung des Gas-Dampfgemisches zur weiteren Aufreinigung des abgetrennten Kohlendioxids durch weitere Kondensation von Absorptionsmedium.

Ein weiterer Vorteil aus der fossilbefeuerte Kraftwerksanlage ergibt sich durch die Implementierung eines Wärmeüberträgers, der primärseitig mit der Druckseite eines Kohlendioxidverdichters und sekundärseitig mit der Desorptionseinheit verbunden ist. Durch diese Ausgestaltung wird die bei der Verdichtung von Kohlendioxid anfallende Wärme für den Desorptionsprozess genutzt.

Bevorzugterweise ist in der fossilbefeuerten Kraftwerksanlage ein Wärmeübertrager vorgesehen, der primärseitig mit der Prozessdampfleitung und sekundärseitig mit der Desorptionseinheit verbunden ist. Dadurch kann der Desorptionsprozess auch ohne Unterstützung von anderweitig abfallender Wärme betrieben werden. Dies ist zum Beispiel beim An- oder Abfahren der Abscheideeinrichtung von Bedeutung. Hierdurch wird der An- bzw. Abfahrvorgang unterstützt, wobei eine besonders effiziente Nutzung der Wärme vorgesehen ist.

In einer besonderen Weiterbildung der fossilbefeuerten Kraftwerksanlage ist ein Wärmeübertrager vorgesehen, der primärseitig in die Verbindungsleitung zwischen Absorptionseinheit und Desorptionseinheit geschaltet ist, und der sekundär zuleitend mit der Druckseite des Desorbatverdichters und sekundär ableitend mit der Trennvorrichtung verbunden ist. Im Betrieb ist somit Komprimierungswärme für die Erwärmung eines kohlendioxidhaltigen Absorptionsmediums nutzbar.

Weitere vorteilhafte Weiterbildungen der fossilbefeuerten Kraftwerksanlage ergeben sich in analoger Weise aus den entsprechenden Weiterbildungen des voranbeschriebenen Kohlendioxid-Abtrennungsverfahrens.

Nachfolgend wird ein Ausführungsbeispiel der Erfindung anhand der beigefügten schematischen Zeichnung näher erläutert. Es zeigt:
- FIG 1: Ein Ausführungsbeispiel einer fossilbefeuerten Kraftwerksanlage
- FIG 2: Ein Ausführungsbeispiel einer fossilbefeuerten Kraftwerksanlage mit zusätzlichem Wärmetauscher zur Vorwärmung von beladenem Absorptionsmedium

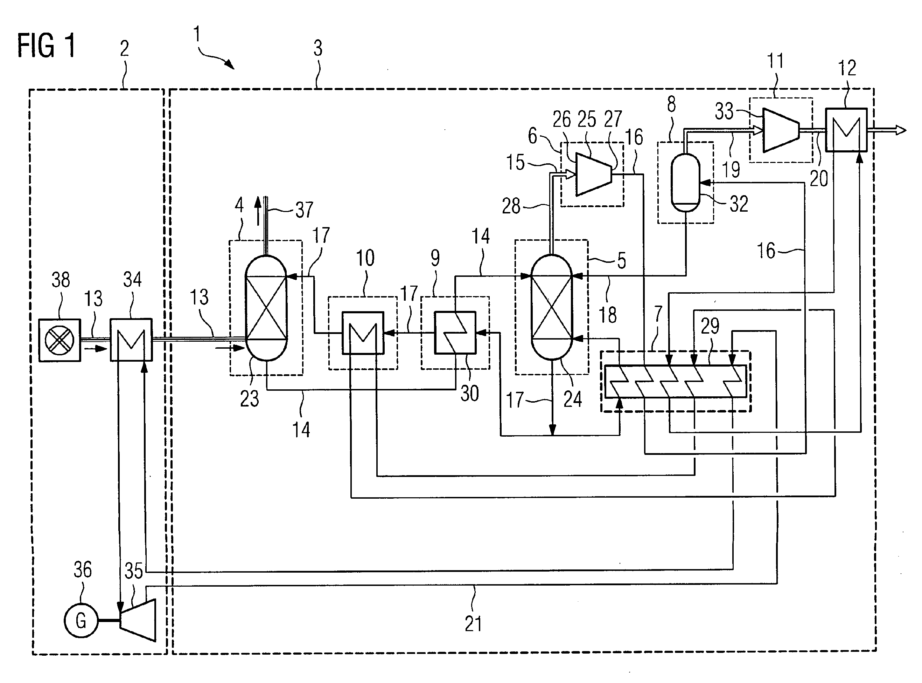

In FIG 1 ist die fossilbefeuerte Kraftwerksanlage 1 dargestellt mit einer Verbrennungseinrichtung 2 und einer Kohlendioxid-Abscheideeinrichtung 3.

Die Verbrennungseinrichtung 2 im vorliegenden Ausführungsbeispiel der Figur 1 umfasst eine Brennkammer 38, in der ein fossiles Gas verbrannt wird, wobei ein heißes kohlendioxidhaltiges Rauchgas 13 entsteht, einen Abhitzedampferzeuger 34, der der Brennkammer 38 nachgeschaltet ist, und aus dem heißen kohlendioxidhaltiges Rauchgas 13 einen Dampf erzeugt, eine Dampfturbine 35, die mit dem Abhitzedampferzeuger 34 verschaltet ist und die mit dem erzeugten Dampf angetrieben wird, sowie einen Generator 36, der mit der Dampfturbine 35 gekoppelt ist und Strom erzeugt. Die in der Verbrennungsvorrichtung 2 beschriebene Anordnung, ist Teil eines Gas-und-Dampfturbinen-Kraftwerks (GuD).

Die Kohlendioxid-Abscheideeinrichtung 3 ist der Verbrennungseinrichtung 2 nachgeschaltet. Das heiße kohlendioxidhaltige Rauchgas 13 wird in die Kohlendioxid-Abscheideeinrichtung 3 im unteren Bereich der Absorptionseinheit 23 eingeleitet. Im oberen Bereich der Absorptionseinheit 23 wird ein Absorptionsmedium 17 eingeleitet, welches zum unteren Bereich der Absorptionseinheit 23 strömt. Dabei kommt das Absorptionsmedium 17 mit dem heißen kohlendioxidhaltigen Rauchgas 13 in Kontakt, wobei es Kohlendioxid aufnimmt. Dabei steigt die Konzentration an Kohlendioxid in dem von oben nach unten strömenden Absorptionsmedium 17. Dadurch wird ein beladenes Absorptionsmedium 14 sowie ein im Wesentlichen von Kohlendioxid bereinigtes Rauchgas 37 gebildet. Das im Wesentlichen von Kohlendioxid bereinigte Rauchgas 37 wird im oberen Bereich der Absorptionseinheit 23 abgeleitet und einer weiteren Verwendung oder Austragung zugeführt. Das beladene Absorptionsmedium 14 wird im unteren Bereich der Absorptionseinheit 23 ausgeleitet. Die Absorptionseinheit 23 ist über einen Wärmeübertrager 30 mit einer Desorptionseinheit 24 derart verbunden, dass das beladene Absorptionsmedium 14 im oberen Bereich der Desorptionseinheit 24 eingeleitet wird.

Innerhalb der Desorptionseinheit 24 strömt das beladene Absorptionsmedium 14 in den unteren Bereich, wo es weiter erwärmt wird und enthaltenes Kohlendioxid thermisch ausgetrieben wird. Dabei sinkt die Konzentration an Kohlendioxid von dem beladenen Absorptionsmedium 14 von oben nach unten, wobei die Temperatur von oben nach unten steigt. Dadurch wird ein von Kohlendioxid befreites regeneriertes Absorptionsmedium 17, sowie ein desorbiertes Kohlendioxid 28 in Form eines Gas-Dampfgemisches 15 bestehend aus Kohlendioxid und verdampftem Absorptionsmedium gebildet. Das regenerierte Absorptionsmedium 17 wird im unteren Bereich der Desorptionseinheit 24 ausgeleitet, das Gas- Dampfgemisch 15 im oberen Bereich.

Die Desorptionseinheit 24 ist nachgeschaltet sekundärseitig zuleitend mit einem Wärmetauscher 29, primärseitig zuleitend mit einem Wärmetauscher 30 und mit der Saugseite 26 eines Desorbatverdichters 25 verbunden.

Ein Teil des aus der Desorptionseinheit 24 ausgeleiteten regenerierten Absorptionsmediums 17 wird in dem Wärmeübertrager 30 geleitet, ein anderer Teil des regenerierten Absorptionsmediums 17 wird in dem Wärmetauscher 29 geleitet und erwärmt. Der Wärmetauscher 29 ist dabei derart mit der Desorptionseinheit 24 verschaltet, dass das erwärmte regenerierte Absorptionsmedium 17 erneut der Desorptionseinheit 24 zugeführt wird.

Das die Desorptionseinheit 24 verlassende Gas- Dampfgemisch 15 wird in dem nachgeschalteten Desorbatverdichter 25 an der Saugseite 26 eingeleitet und verdichtet, wodurch ein in Temperatur und Druck erhöhtes, verdichtetes Gas- Dampfgemisches 16 entsteht. Der Desorbatverdichter 25 ist mit seiner Druckseite 27 primärseitig zuleitend mit dem Wärmeübertrager 29 verbunden.

In dem Wärmeübertrager 29 wird die Wärme an das sekundärseitig zugeleitete regenerierte Absorptionsmedium 17 abgegeben, welches sekundärseitig abgeleitet wird. Dabei ist der Wärmeübertrager 29 derart mit der Desorptionseinheit 24 verbunden, dass das erwärmte regenerierte Absorptionsmedium 17 in einem Bereich zwischen dem oberen Bereich und dem unteren Bereich eingeleitet wird.

Der vorgesehene Wärmeübertrager 30 ist primärseitig zuleitend mit der Desorptionseinheit 24 und ableitend mit der Absorptionseinheit 23 und sekundärseitig zuleitend mit der Absorptionseinheit 23 und ableitend mit der Desorptionseinheit 24 verbunden. Dem aus der Desorptionseinheit 24, durch den Wärmeübertrager 30, in die Absorptionseinheit 23 geleiteten regenerierten Absorptionsmedium 17 wird in dem Wärmeübertrager 30 Wärme entzogen, und dem im Kreuzstrom aus der Absorptionseinheit 23, durch den Wärmeübertrager 30, in die Desorptionseinheit 24 geleitete beladene Absorptionsmedium 14 wird in dem Wärmeübertrager 30 Wärme zugeführt. Das regenerierte Absorptionsmedium 17 wird zur erneuten Aufnahme von Kohlendioxid der Absorptionseinheit 23 zugeführt.

Der Wärmeübertrager 29 ist primärseitig ableitend mit einer Trennvorrichtung 32 verschaltet, die zur Rückführung von kondensiertem Absorptionsmedium 18 mit der Desorptionseinheit 24 und zum Ableiten von gasförmigen Kohlendioxid 19 mit einem Kohlendioxidverdichter 33 verbunden ist. In die Trennvorrichtung 32 wird das Gas- Dampfgemisch 15 eingeleitet und expandiert. Dadurch entsteht ein kondensiertes Absorptionsmedium 18 und gasförmiges Kohlendioxid 19. Zur Ableitung des kondensierten Absorptionsmediums 18 ist die Trennvorrichtung 32 mit der Desorptionseinheit 24 derart verbunden, dass das kondensierte Absorptionsmedium 18 im oberen Bereich der Desorptionseinheit 24 zugeführt wird. Zur Ableitung des gasförmigen Kohlendioxids 19 ist die Trennvorrichtung 32 mit der Saugseite eines Kohlendioxidverdichters 33 verbunden.

Dem Kohlendioxidverdichter 33 ist ein Wärmeübertrager 12 nachgeschaltet, der primärseitig mit der Druckseite des Kohlendioxidverdichters 33 und sekundärseitig mit dem Wärmeübertrager 29 derart verbunden ist, dass die durch die Verdichtung des gasförmigen Kohlendioxids 19 entstehende Wärme, durch den Wärmeübertrager 12 entzogen und über den Wärmeübertrager 29 der Desorptionseinheit 24 zugeführt wird. Das den Kohlendioxidverdichter 33 verlassende flüssige Kohlendioxid 20 wird einer weiteren Verwendung zugeführt.

Der Wärmeübertrager 29 ist primärseitig mit der Prozessdampfleitung 21 und sekundärseitig mit der Desorptionseinheit 24 verbunden. Dadurch wird in dem Wärmeübertrager 29 der Prozessdampfleitung 21 Wärme entzogen, und der Desorptionseinheit 24 zugeführt.

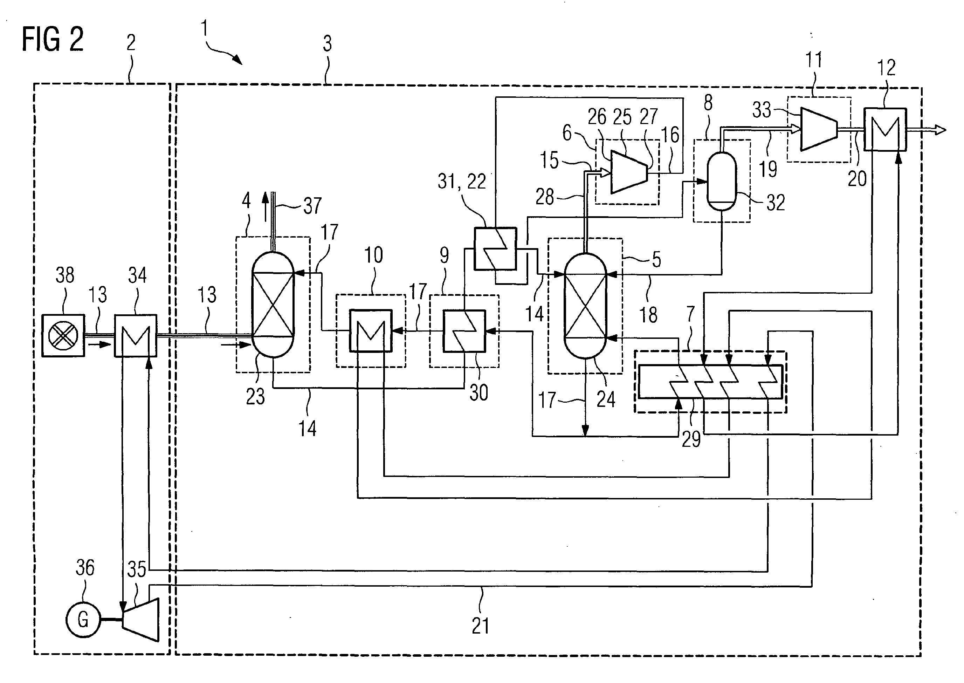

In FIG 2 ist ein Ausführungsbeispiel einer fossilbefeuerten Kraftwerksanlage 1 mit zusätzlichem Wärmetauscher 31 zur Vorwärmung von beladenem Absorptionsmedium 14 dargestellt. Diese ist weitgehend analog ausgestaltet wie die in FIG 1 beschriebene fossilbefeuerte Kraftwerksanlage 1.

Die Druckseite 27 des Desorbatverdichters 25 ist dabei verbunden mit der primären Zuleitung des Wärmetauschers 31. Primär ableitend ist der Wärmetauscher 31 verbunden mit der Trennvorrichtung 32. Sekundär ist der Wärmetauscher zuleitend verbunden mit dem Wärmeübertrager 30 und ableitend mit der Desorptionseinheit 24. Nicht gezeigt ist eine sekundärseitige Verschaltung des Wärmetauschers 31 an eine andere Stelle in die Leitung zwischen Absorptionseinheit 23 und Desorptionseinheit 24 für beladenes Absorptionsmedium 14.

## Patentansprüche

1. Verfahren zum Abtrennen von Kohlendioxid aus einem Rauchgas einer fossilbefeuerten Kraftwerksanlage, bei dem
a) in einem Verbrennungsprozess (2) ein fossiler Brennstoff verbrannt wird, wobei ein heißes, kohlendioxidhaltiges Abgas (13) erzeugt wird,
b) in einem Absorptionsprozess (4) kohlendioxidhaltiges Abgas (13) mit einem Absorptionsmedium in Kontakt gebracht wird, wobei Kohlendioxid von dem Absorptionsmedium aufgenommen wird, wobei ein beladenes Absorptionsmedium (14) gebildet wird,
c) in einem Desorptionsprozess (5) von dem beladenen Absorptionsmedium (14) gasförmiges Kohlendioxid (15) abgegeben wird,
d) in einem Verdichtungsprozess (6) gasförmiges Kohlendioxid verdichtet wird, wobei es auf eine Temperatur T erwärmt wird,
e) Wärme von verdichtetem Kohlendioxid in dem Desorptionsprozess (5) verwendet wird.

2. Verfahren nach Anspruch 1, bei dem in dem Desorptionsprozess (5) von einem beladenen Absorptionsmedium (14) gasförmiges Kohlendioxid thermisch ausgetrieben wird, wobei ein regeneriertes Absorptionsmedium (17) gebildet wird.

3. Verfahren nach Anspruch 1 bis 2, wobei ein Fluid als Absorptionsmedium verwendet wird.

4. Verfahren nach Anspruch 3, wobei eine Flüssigkeit, ein Gas, ein Aerosol oder eine Suspension als Fluid verwendet wird.

5. Verfahren nach Anspruch 4, wobei ein verdampfbares Lösungsmittel als Flüssigkeit verwendet wird.

6. Verfahren nach Anspruch 5, wobei eine Lösung aus H2O und Aminosäuresalz als Lösungsmittel verwendet wird.

7. Verfahren nach Anspruch 1 bis 6, bei dem in dem Desorptionsprozess (3) von einem beladenen Absorptionsmedium (14) gasförmiges Kohlendioxid thermisch ausgetrieben wird, wobei ein Gas-/ Dampfgemisch (15) aus Kohlendioxid und verdampftem Absorptionsmedium gebildet wird.

8. Verfahren nach Anspruch 1 bis 3, bei dem ein Teil von gasförmigem Kohlendioxid verdichtet wird, wobei es auf eine Temperatur T erwärmt wird.

9. Verfahren nach Anspruch 1 bis 4, bei dem ein Teil der Wärme von verdichtetem Kohlendioxid in dem Desorptionsprozess verwendet wird.

10. Verfahren nach Anspruch 1 bis 5, bei dem in einem Wärmeübertragungsprozess (7) Wärme von einem Gas-/ Dampfgemisch (15) entzogen wird, an ein regeneriertes Absorptionsmedium (17) abgegeben wird und in dem Desorptionsprozess (5) zugeführt wird.

11. Verfahren nach einem der Ansprüche 2 bis 10, bei dem das regenerierte Absorptionsmedium (17) dem Absorptionsprozess (4) zugeführt wird.

12. Verfahren nach einem der Ansprüche 2 bis 11, bei dem in einem Wärmeübertragungsprozess (9) Wärme von regeneriertem Absorptionsmedium (17) entzogen wird, an ein beladenes Absorptionsmedium (14) abgegeben wird.

13. Verfahren nach Anspruch 12, bei dem in einem weiteren Wärmeübertragungsprozess (10) Wärme von regeneriertem Absorptionsmedium (17) in Abhängigkeit von dem erforderlichen Temperaturniveau im Absorptionsprozess (4) entzogen wird, und dem Desorptionsprozess (5) zur Verfügung gestellt wird.

14. Verfahren nach Anspruch 7, bei dem in einem Entspannungsprozess (8) ein verdichtetes Gas-/ Dampfgemisch (16) expandiert wird, wobei kondensiertes Absorptionsmedium (18) abgeschieden wird und ein im Wesentlichen von Absorptionsmedium gasförmiges Kohlendioxid (19) gebildet wird.

15. Verfahren nach Anspruch 14, bei dem das kondensierte Absorptionsmedium (18) dem Desorptionsprozess (5) zugeführt wird.

16. Verfahren nach Anspruch 14 oder 15, bei dem in einem Verdichtungsprozess (11) ein im Wesentlichen von Absorptionsmedium freies Kohlendioxid (19) verflüssigt wird.

17. Verfahren nach Anspruch 16, bei dem in einem Wärmeübertragungsprozess (12) Wärme von dem flüssigen Kohlendioxid (20) zur Unterstützung des Desorptionsprozesses (5) zugeführt wird.

18. Verfahren nach Anspruch 1 bis 17, bei dem in einem Wärmeübertragungsprozess (7) Wärme von Prozessdampf (21) entzogen wird und dem Desorptionsprozesses (5) zur Unterstützung zugeführt wird.

19. Verfahren nach einem der Ansprüche 1 bis 18, bei dem in einem Wärmeübertragungsprozess (22) Wärme von verdichtetem Gas-/ Dampfgemisch (16) entzogen wird und an das beladenes Absorptionsmedium (14) abgegeben wird.

20. Verfahren nach einem der vorhergehenden Ansprüche, **gekennzeichnet durch** eine Anwendung bei einem fossilbefeuertem Dampfkraftwerk.

21. Verfahren nach einem der Ansprüche 1 bis 19, **gekennzeichnet durch** eine Anwendung bei einer kombinierten Gas- und Dampfturbinen-Kraftwerksanlage.

22. Fossilbefeuerte Kraftwerksanlage (1) mit einer einer Verbrennungseinrichtung (2) nachgeschalteten Abscheideeinrichtung (3), zur Abscheidung von Kohlendioxid aus dem kohlendioxidhaltigen Abgas (13), wobei die Abscheideeinrichtung (3) eine Absorptionseinheit (23) zur Aufnahme von gasförmigen Kohlendioxid sowie eine Desorptionseinheit (24) zur Abgabe von gasförmigen Kohlendioxid aufweist, **dadurch gekennzeichnet, dass** ein Desorbatverdichter (25) mit einer Saugseite (26) und einer Druckseite (27) vorgesehen ist, wobei die Saugseite (26) mit der Desorptionseinheit (24) derart verbunden ist, dass desorbiertes Kohlendioxid (28) in dem Desorbatverdichter (26) komprimierbar ist, und dass ein Wärmeübertrager (29) vorgesehen ist, der primärsei-tig mit der Druckseite (27) des Desorbatverdichters (25) und sekundärseitig mit der Desorptionseinheit (24) verbunden ist.

23. Fossilbefeuerte Kraftwerksanlage (1) nach Anspruch 22, **dadurch gekennzeichnet, dass** ein Wärmeübertrager (30) vorgesehen ist, der primärseitig zuleitend mit der Desorptionseinheit (24) und ableitend mit der Absorptionseinheit (23) und sekundärseitig zuleitend mit der Absorptionseinheit (23) und ableitend mit der Desorptionseinheit (24) verbunden ist.

24. Fossilbefeuerte Kraftwerksanlage (1) nach Anspruch 22 oder 23, **dadurch gekennzeichnet, dass** einem Wärmeübertrager (29) primärseitig eine Trennvorrichtung (32) nachgeschaltet ist, die zur Rückführung von beladenem Absorbermedium (14) mit der Desorptionseinheit (24) und zum Ableiten von gasförmigen Kohlendioxid (19) mit einem Kohlendioxidverdichter (33) verbunden ist.

25. Fossilbefeuerte Kraftwerksanlage (1) nach Anspruch 24, **dadurch gekennzeichnet, dass** dem Kohlendioxidverdichter (33) ein Wärmeübertrager (12) nachgeschaltet ist, der primärseitig mit der Druckseite des Kohlendioxidverdichters (33) und sekundärseitig mit der Desorptionseinheit (24) verbunden ist.

26. Fossilbefeuerte Kraftwerksanlage (1) nach Anspruch 24 oder 25, **dadurch gekennzeichnet, dass** der Wärmeübertrager (29) primärseitig mit einer Prozessdampfleitung (21) und sekundärseitig mit der Desorptionseinheit (24) verbunden ist.

27. Fossilbefeuerte Kraftwerksanlage (1) nach einem der Ansprüche 21 bis 26, **dadurch gekennzeichnet, dass** ein Wärmeübertrager (31) vorgesehen ist, der primärseitig in die Verbindungsleitung zwischen Absorptionseinheit (23) und Desorptionseinheit (24) geschaltet ist, und der sekundär zuleitend mit der Druckseite (27) des Desorbatverdichters (25) und sekundär ableitend mit der Trennvorrichtung (32) verbunden ist, so dass im Betrieb Komprimierungswärme für die Erwärmung eines kohlendioxidhaltigen Absorptionsmediums nutzbar ist.
